# EUROPEAN PATENT APPLICATION

(11) **EP 2 492 525 A1**
(43) Date of publication of application: **29.08.2012**
(21) Application number: 10824861.8
(22) Date of filing: 15.10.2010
(51) Int. Cl.: F16C 11/06, F16J 15/52

(54) **BALL JOINT**

(30) Priority: 22.10.2009 JP 2009243353
(71) Applicant: THK Rhythm Co., Ltd., Hamamatsu-shi, Shizuoka 430-0831 (JP)
(72) Inventor: SHIMAZAWA, Toshihiro, Hamamatsu-shi Shizuoka 430-0831 (JP)
(74) Representative: Körber, Martin Hans
(86) International application number: PCT/JP2010/068134
(87) International publication number: WO 2011/049012

(57) **Abstract**

A ball joint capable of maintaining a good sealing characteristic even when a film part of a dust cover is strained and capable of improving the assembly characteristic of the dust cover is provided at low cost. In a ball joint having a ball stud having a spherical head part, a socket turnably housing the spherical head part and having an opening in one side, and a dust cover; the ball stud is provided with a first flange part, an intermediate shaft part, and a second flange part; and the dust cover is provided with an inner peripheral part sandwiched between the first flange part and the second flange part and fitting the intermediate shaft part, a lip part being in close contact with the second flange part, and a protruding part having a gap at least at one location and abutting the second flange part.

## Description

### Technical Field

The present invention relates to a ball joint mainly used as a coupling device of a link mechanism for a vehicle and particularly relates to a ball joint in which the sealing characteristic of a dust cover is not reduced.

### Background Art

Conventionally, for example, the one described in Patent Literature 1 has been known as a ball joint which is used in a suspension mechanism or a steering mechanism of a vehicle. This ball joint has a structure in which a small-diameter side end part of a dust cover composed of an elastic material such as rubber is provided with a lip part (annular projection) which is in close contact by elasticity with the entire periphery of the outer peripheral surface of a flange part of a ball stud, and the small-diameter side end part is brought into close contact with the flange-part end surface of the ball stud by the urging force generated by the elasticity of the dust cover.
Patent Literature 1: Japanese Utility Model Laid-Open No. H1-139119

However, the elastic force of the dust cover is reduced due to time-dependent change such as thermal deterioration; and, in a low-temperature environment, the elastic material such as rubber is hardened, and the elastic force is significantly reduced compared with that in a normal temperature environment. Therefore, in the conventional ball joint as described above, the urging force of the small-diameter side end part with respect to the flange-part end surface is reduced along with reduction in the elastic force of the dust cover, and the close contact between the small-diameter side end part and the flange part cannot be maintained.

Particularly when the ball stud swings in a low-temperature environment, the side in which the film part (bellows part) of the dust cover is stretched, in other words, in the side in which the distance between the socket outer peripheral surface to which the dust cover is attached and the flange part of the ball stud is increased, the small-diameter side end part of the dust cover is strained to the socket-side direction by the hardened film part. Therefore, an appropriate assembly state with respect to the ball stud cannot be maintained, and the sealing characteristic of the dust cover is reduced. Therefore, the structure of the ball joint described in Patent Literature 1 has a problem that the dust cover cannot exhibit a good sealing characteristic in all the environments in which the ball joint is used. The urging force of the dust cover is the force that is generated by the elastic force of the film part that works to restore deformation when the dust cover is assembled with the socket and the ball stud. Therefore, the shape of the film part such as a film thickness and a film length affects the magnitude of the obtained urging force. The larger the swing angle of the ball stud with respect to the socket, the larger the film length of the dust cover has to be in order to follow the swinging actuation thereof. However, the larger the film length, the less the film part of the dust cover undergoes buckling, partial extreme bending, etc. in the state assembled with the socket and the ball stud, and it is difficult to generate predetermined urging force. Therefore, in the case in which a comparatively large swing angle is needed, there is a problem that the urging force that is necessary for bringing the small-diameter side end part into close contact with the flange-part end surface of the ball stud cannot be obtained by the structure of the ball joint described in Patent Literature 1. Furthermore, in the case in which a comparatively large swing angle is required, a function of generating predetermined urging force in the shape of the film part is added. Therefore, compared with the case without the addition of the function, management of a complex film shape andhighly-precise film shape in consideration of thick film thickness or the state of elastic deformation is required, and the cost of the dust cover is increased. It is an object of the present invention to provide at low cost a ball joint capable of maintaining a good sealing characteristic even when the film part of the dust cover is strained and capable of improving the assembly characteristic of the dust cover.

### Disclosure of the Invention

The present invention is configured in the below manner in order to achieve this object. First, the present invention is a ball joint having: a ball stud provided with a spherical head part at one end of a stud part; a socket turnably housing the spherical head part, the socket having one side provided with an opening from which the stud part projects; and a dust cover provided with a small-diameter opening attached to the stud part and a large-diameter opening attached to the socket, the dust cover having elasticity; wherein the stud part of the ball stud is provided with a first flange part, an intermediate shaft part, and a second flange part sequentially from the side of the spherical head part; the small-diameter opening of the dust cover is provided with an inner peripheral part sandwiched between the first flange part and the second flange part and fits the intermediate shaft part by elasticity, a lip part being in close contact with an outer peripheral surface of the second flange part by elasticity, and a protruding part positioned between the inner peripheral part and the lip part, having at least a gap at one location, and abutting a spherical-head-part side end surface of the second flange part.

The protruding part of the dust cover is composed of an annular protrusion provided with one or a plurality of cut-away part or is composed of a plurality of protrusions of any one species of or a combination of two or more species of a circular-cone protrusion, a hemispherical protrusion, a circular-cylindrical protrusion, a pyramidal protrusion, and a prism protrusion disposed in a circumferential direction.

The second flange part of the ball stud is inclined toward the inside of a radial direction so that the spherical-head-part side end surface is close to the spherical head part side; and the intermediate shaft part of the ball stud is inclined so that the diameter of the outer peripheral surface thereof is reduced toward the spherical head part side.

Furthermore, the inner peripheral part of the dust cover has an end part of the first flange part side having a diameter larger than the diameter of an end part of the second flange part side and is provided with a groove in a circumferential direction which retains a lubricant agent.

According to the present invention, the small-diameter opening of the dust cover can be reliably retained with the ball stud since the ball stud is provided with the first flange part and the second flange part. Therefore, the close contact of the dust cover with respect to the ball stud can be maintained even when the elastic force of the dust cover is changed depending on a used environment, and the film is not required to have an increased thickness or have a complex shape in order to ensure the urging force of the dust cover toward the ball stud in that process. Therefore, a ball joint capable of maintaining a good sealing characteristic can be provided at low cost. According to the present invention, the dust cover is provided with the protruding part having a gap at least at one location and abutting the spherical-head-part side end surface of the second flange part of the ball stud. Therefore, the inner peripheral part of the dust cover can be reliably positioned between the first flange part and the second flange part of the ball stud. Therefore, a good sealing characteristic can be ensured. Moreover, the protruding part is provided with the location not abutting the spherical-head-part side end surface of the second flange part of the ball stud. As a result, the deformation rigidity of the protruding part can be reduced. Therefore, upon assembly of the dust cover, stoppage in the state in which the protruding part is spread over the outer peripheral surface of the second flange part is not caused, and the dust cover can be easily assembledatapredetermined position. Furthermore, in the state in which the ball joint is used, the protruding part is provided with a part that is not in contact with the ball stud when the ball stud actuates to slide about the axial line thereof with respect to the socket. Therefore, joined-turning of the dust cover and the ball stud can be prevented, and the sealing characteristic can be improved. According to the present invention, the spherical-head-part side end surface of the second flange part of the ball stud is inclined toward the inside of the radial direction so as to be close to the spherical head part side. As a result, upon assembly of the dust cover, the resistance generated upon introduction of the protruding part to the predetermined position can be reduced, and the assembly characteristic of the dust cover can be therefore improved. According to the present invention, the outer peripheral surface of the intermediate shaft part of the ball stud is tapered so that the diameter thereof is reduced toward the spherical head part side. As a result, in the process in which the inner peripheral part of the small-diameter opening is seated upon assembly of the dust cover, the contact resistance of the inner peripheral part and the outer peripheral surface of the intermediate shaft part is reduced to facilitate movement, and the inner peripheral part and the protruding part can be smoothly introduced to the predetermined position. Therefore, the assembly characteristic of the dust cover can be improved. According to the present invention, the inner peripheral part of the small-diameter opening of the dust cover is configured so that the diameter of the first-flange-part side end part is larger than the diameter of the second-flange-part side end part. As a result, in the process in which the inner peripheral part of the small-diameter opening is seated upon assembly of the dust cover, the contact resistance of the inner peripheral part and the outer peripheral surface of the intermediate shaft part is reduced to facilitate movement, and the inner peripheral part and the protruding part can be smoothly introduced to the predetermined position.

Therefore, the assembly characteristic of the dust cover can be improved.

### Brief Description of the Drawings

FIG. 1 is a cross-sectional view showing an embodiment of a ball joint according to the present invention;
FIGS. 2A and 2B are explanatory drawings showing a dust cover and a ball stud of FIG. 1;
FIGS. 3A and 3B are explanatory drawings showing a small-diameter opening of the dust cover of FIGS. 2A and 2B in an enlarged manner;
FIG. 4 is a cross-sectional view showing, in an enlarged manner, a fitting part of the ball stud and the dust cover of FIG. 1;
FIG. 5 is a cross-sectional view showing defective assembly in the case in which a protruding part of FIG. 4 has no gap;
FIGS. 6A and 6B are explanatory drawings showing another embodiment of the ball joint according to the present invention;
FIGS. 7A and 7B are explanatory drawings showing other embodiments of the ball joint according to the present invention; and
FIGS. 8A and 8B are cross-sectional views showing other embodiments of the ball joint according to the present invention.

### Best Modes for Carrying Out the Invention

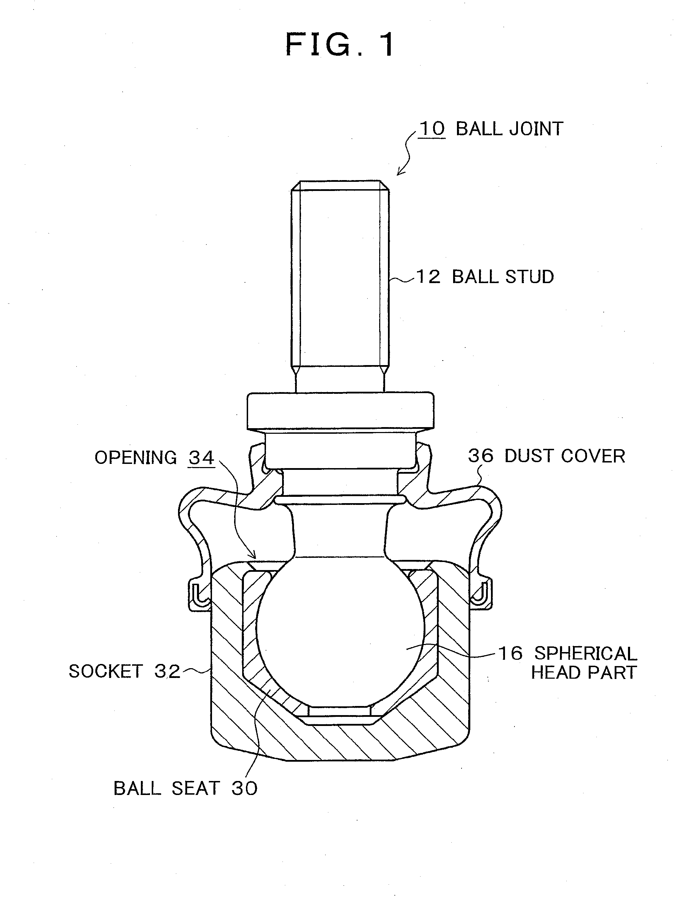

FIG. 1 is a cross-sectional view showing an embodiment of a ball joint of the present invention.

In FIG. 1, the ball joint 10 is composed of a ball stud 12, a ball seat 30, a socket 32, and a dust cover 36. In the ball joint 10, a spherical head part 16 formed at an end of the ball stud 12 is incorporated into the socket 32 via the ball seat 30, and an opening 34 of the socket 32 is subjected to caulking to swingably and turnably support the ball stud 12. The dust cover 36, which prevents water and dust from entering the inside from the opening 34, is attached between the ball stud 12 and the socket 32.

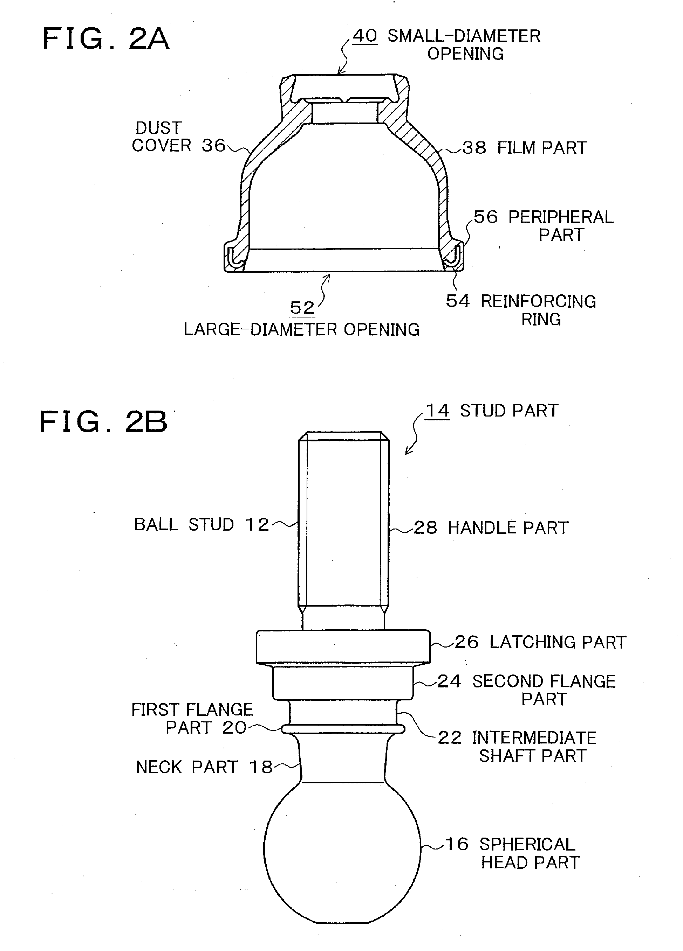

FIGS. 2A and 2B are explanatory drawings respectively showing the dust cover 36 and the ball stud 12 of FIG. 1. FIG. 2A is a cross section of the dust cover 36, and FIG. 2B shows the ball stud 12. In FIG. 2A, the dust cover 36 is formed of an elastic material such as rubber, has a small-diameter opening 40 at one end of a film part 38 and a large-diameter opening 52 at the other end, forms a peripheral part 56, in which a metal reinforcing ring 54 is embedded, at the large-diameter opening 52, and is fixed to the socket 32 while ensuring rigidity by the reinforcing ring 54. In the present embodiment, the reinforcing ring 54 is embedded in the large-diameter opening 52. However, the large-diameter opening 52 may be fixed to the socket 32 by another configuration. Also, the shape of the film part 38 is not limited to the shape shown in FIG. 2A, but may be another shape.

In FIG. 2B, the ball stud 12 is provided with the spherical head part 16 at one end of a stud part 14. The stud part 14 is provided with, sequentially from the side of the spherical head part 16, a neck part 18, a first flange part 20, an intermediate shaft part 22, a second flange part 24, a latching part 26, and a handle part 28. The outer diameter of the intermediate shaft part 22, which is a recessed part between the first flange part 20 and the second flange part 24, is only required to be smaller than the outer diameters of the first flange part 20 and the second flange part 24. In the present embodiment, the outer diameter of the first flange part 20 is smaller than the outer diameter of the second flange part 24. However, this is a matter of designing, and the outer diameter of the first flange part may be the same diameter as or larger than the outer diameter of the second flange part 24 depending on the specifications required for the ball joint. Moreover, in the present embodiment, a thread is formed on the outer periphery of the handle part 28, the latching part 26 is provided, and the handle part 28 is fixed to an objective component such as a suspension arm with a nut. However, the disposition and shape of the latching part 26 and the handle part 28 are arbitrary depending on the method of attaching the ball joint 10.

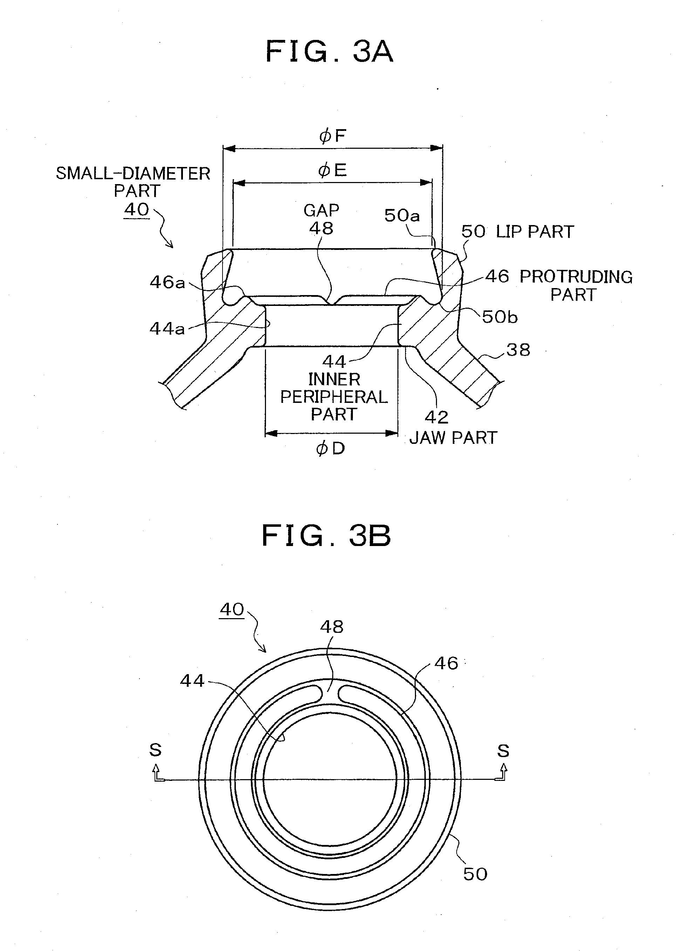

FIGS. 3A and 3B are explanatory drawings showing, in an enlarged manner, the small-diameter opening 40 of the dust cover 36 shown in FIG. 2A. FIG. 3A shows a cross section, FIG. 3B shows a plane showing FIG. 3A from the upper side, and the cross section S-S of FIG. 3B corresponds to FIG. 3A.

In FIG. 3A, the small-diameter opening 40 is provided with, from the film part 38 side, a jaw part 42, an inner peripheral part 44, a protruding part 46, and a lip part 50; and the protruding part 46 has a gap 48. An inner peripheral surface 44a of the inner peripheral part 44 has a cylindrical shape having an inner diameter D and has a diameter smaller than the outer diameter of the intermediate shaft part 22 of the ball stud 12, which is to fit therein, in the state in which it is not attached to the ball stud 12. The protruding part 46 has a triangular cross-sectional shape of which distal end part 46a is round, and an inner diameter E of a distal end part 50a of the lip part 50 is smaller than an inner diameter F of a base part 50b. In the state in which it is not attached to the ball stud 12, the inner diameter E of the distal end part 50a is smaller than the outer diameter of the second flange part 24 of the ball stud 12, which is to fit therein. The cross-sectional shape of the protruding part 46 is triangular in the present embodiment, but may be another shape such as a semicircle.

In FIG. 3B, the protruding part 46, which is annular in the circumferential direction and has the gap 48 formed by cutting away part thereof, is between the inner peripheral part 44 and the lip part 50. In the present embodiment, the gap 48 of the protruding part 46 is provided at one location, but may be provided at two or more locations.

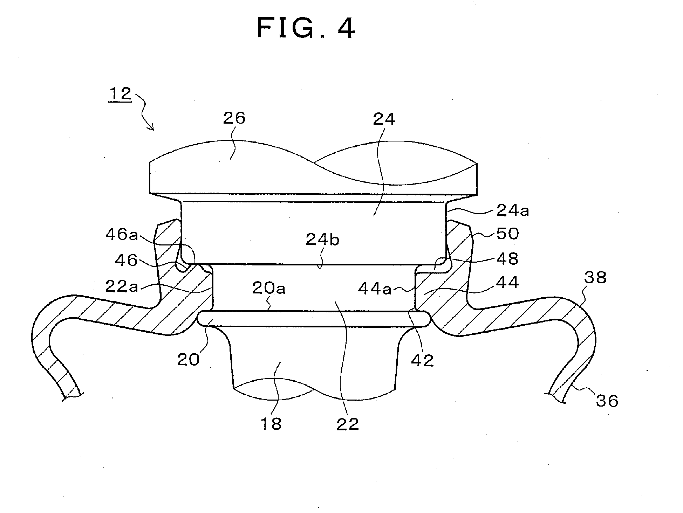

FIG. 4 is a cross-sectional view showing, in an enlarged manner, the fitting part of the ball stud 12 and the dust cover 36 of FIG. 1 in the state in which the dust cover 36 shown in FIG. 2A is inserted from the large-diameter opening 52 side to the handle part 28 side of the ball stud 12 shown in FIG. 2B to cause the small-diameter opening 40 to pass through the latching part 26 and fit in a predetermined position of the stud part 14. In FIG. 4, the jaw part 42 of the dust cover 36 abuts a second-flange-part side end surface 20a of the first flange part 20, and the inner peripheral part 44 is fitting the intermediate shaft part 22 of the ball stud 12 by elasticity. A sealing characteristic is ensured when the inner peripheral surface 44a of the inner peripheral part 44 and an outer peripheral surface 22a of the intermediate shaft part 22 are in close contact with each other. The lip part 50 is in close contact with an outer peripheral surface 24a of the second flange part 24 by elasticity, thereby reinforcing the sealing characteristic of the small-diameter opening 40 in the case in which the film part 38 is strained. Furthermore, except the part of the gap 48, the protrudingpart46isabuttingaspherical-head-part side end surface 24b of the second flange part 24.

The protruding part 46 of the dust cover 36 is provided in order to position the inner peripheral part 44 in the axial direction between the first flange part 20 and the second flange part 24 of the ball stud 12. In other words, the inner peripheral part 44 is positioned when the distal end 46a of the protruding part 46 and the jaw part 42 are compressed and sandwiched by the first flange part 20 and the second flange part 24. In this manner, in addition to bringing the inner peripheral part 44 of the dust cover 36 into close contact with the intermediate shaft part 22 of the ball stud 12 by elasticity, the inner peripheral part 44 is sandwiched between the first flange part 20 and the second flange part 24 so as to reliably fit the intermediate shaft part 22. As a result, the small-diameter opening 40 of the dust cover 36 can be firmly retained by the ball stud 12. Therefore, a good sealing characteristic can be maintained. Upon assembly of the dust cover 36, the spherical head part 16 of the ball stud 12 is housed in the ball seat 30 in the socket 32, and the large-diameter opening 52 and the small-diameter opening 40 of the dust cover 36 are subjected to insertion from the handle part 28 side of the ball stud 12. In the process in which the inner peripheral part 44 of the dust cover 36 is assembled at a predetermined position, the inner peripheral part 44 sequentially passes the jaw part 42 to the second flange part 24 when the inner peripheral part 44 is to pass through the second flange part 24. Therefore, the part of the inner peripheral part 44 after passing through the second flange part has an inner diameter smaller than the outer shape of the second flange part 24 because of the restoring force of elastic deformation. As a result, the inner peripheral part 44 and the peripheral part thereof receive the force in the direction that lifts up the protruding part 46 side to the outside of the radial direction. Also, the reaction force of the lip part 50 against the tension force to the second flange part 24 works in the direction that increases the force in the direction that lifts up the protruding part 46 side to the outside of the radial direction. If the protruding part 46 is not provided with the gap 48, in other words, if the protruding part 46 has high deformation rigidity, upon assembly of the dust cover 36, the protruding part 46 easily stops in the state in which the protruding part is spread over the outer peripheral surface 24a of the second flange part 24 due to the force in the direction of lift-up to the outside of the radial direction. However, this can be prevented by cutting away part of the protruding part 46 to provide the gap 48 and reduce the deformation rigidity, and the assembly characteristic of the dust cover 36 is improved.

If the inner peripheral part 44 of the dust cover 36 is seated on the intermediate shaft part 22 in the state in which it is inclined with respect to the axial line direction of the ball stud 12, defective assembly (the state in which not assembled at the predetermined position) such as stoppage in the state in which the protruding part 46 is spread over the outer peripheral part 24a of the second flange part 24 easily occurs.

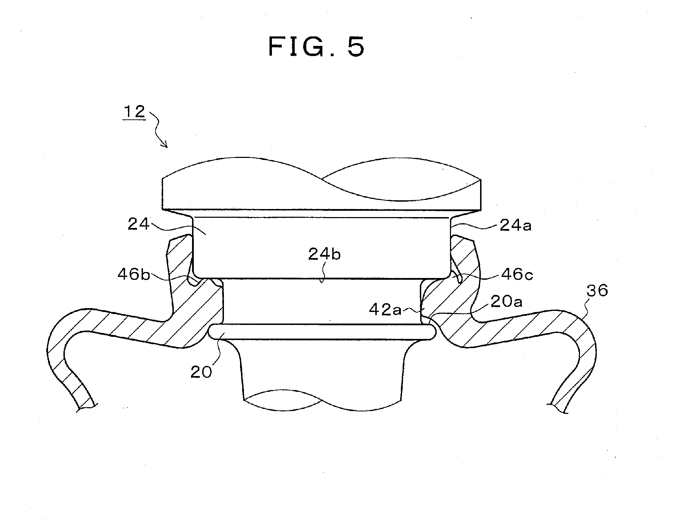

FIG. 5 is a cross-sectional view showing an example of the assembly defect that occurs if the protruding part 46 of FIG. 4 is provided with no gap. In FIG. 5, a left-side protruding part 46b of the dust cover 36 is at a predetermined position of the ball stud 12, in other words, is abutting the spherical-head-part side end surface 24b of the second flange part 24; however, a right-side protruding part 46c is spread over the outer peripheral surface 24a of the second flange part 24, and a jaw part 42a is also in the state in which it is stopped during assembly without abutting the second-flange-part side end surface 20a of the first flange part 20.

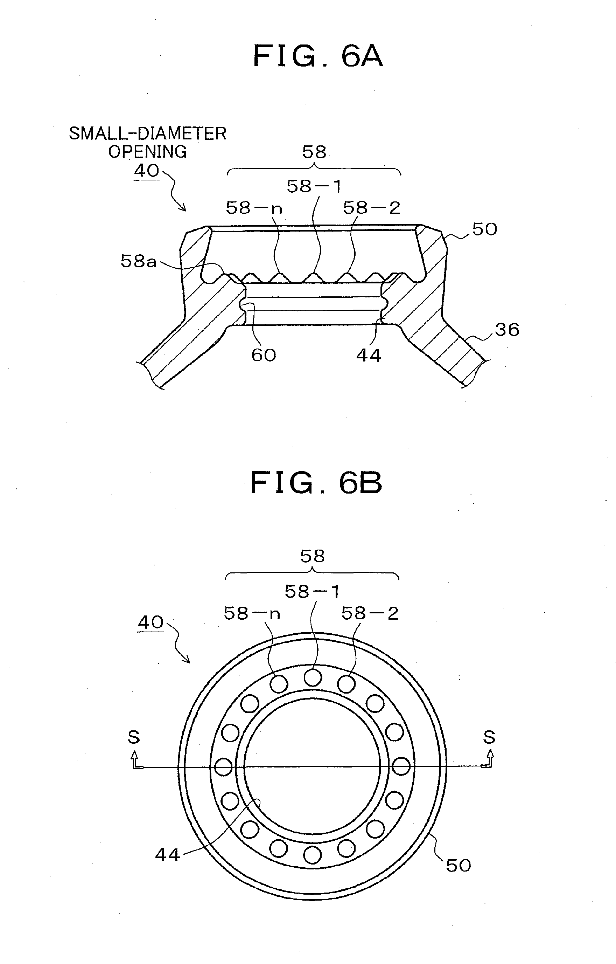

FIGS. 6A and 6B are explanatory drawings showing another embodiment of the ball joint according to the present invention. FIG. 6A shows a cross section of the small-diameter opening 40 of the dust cover 36, FIG. 6B shows a plane showing FIG. 6A from the upper side, and the cross section S-S of FIG. 6B corresponds to FIG. 6A. This is the same as the embodiment shown in FIGS. 3A and 3B except that the shape of the protruding part and the shape of the inner peripheral part of the small-diameter opening 40 are different.

In FIG. 6A, a plurality of protrusions 58-1 to 58-n are provided as a protruding part 58 between the inner peripheral part 44 and the lip part 50.

The protrusions 58-1 to 58-n have distal end parts 58a, which are round circular cones, and are disposed at equal intervals in the circumferential direction as shown in FIG. 6B. As shown in FIG. 6A, the inner peripheral part 44 may be provided with a groove 60 in the circumferential direction in order to store and retain a lubricant agent such as grease.

The number of the groove 60 is one in the present embodiment. However, a plurality of grooves narrower than that may be provided, and the groove (s) may be provided in the embodiment shown in FIGS. 1 to 4 and the embodiments described below. When the protruding part 58 is composed of the plurality of protrusions 58-1 to 58-n in this manner, the deformation rigidity thereof becomes lower than that of the annular protruding part 46 provided with the gap 48 shown in FIGS. 3A and 3B, and the assembly characteristic of the dust cover 36 is further improved. In the present embodiment, the protrusions 58-1 to 58-n of the circular cone shapes are disposed in the circumferential direction at equal intervals. However, the shapes of the protrusions 58-1 to 58-n may be any one species of or a combination of two or more species of: a circular cone shape, a hemispherical shape, a circular cylindrical shape, a pyramidal shape, and a prism shape, and the interval is not required to be equal as long as the protrusions are disposed in the circumferential direction.

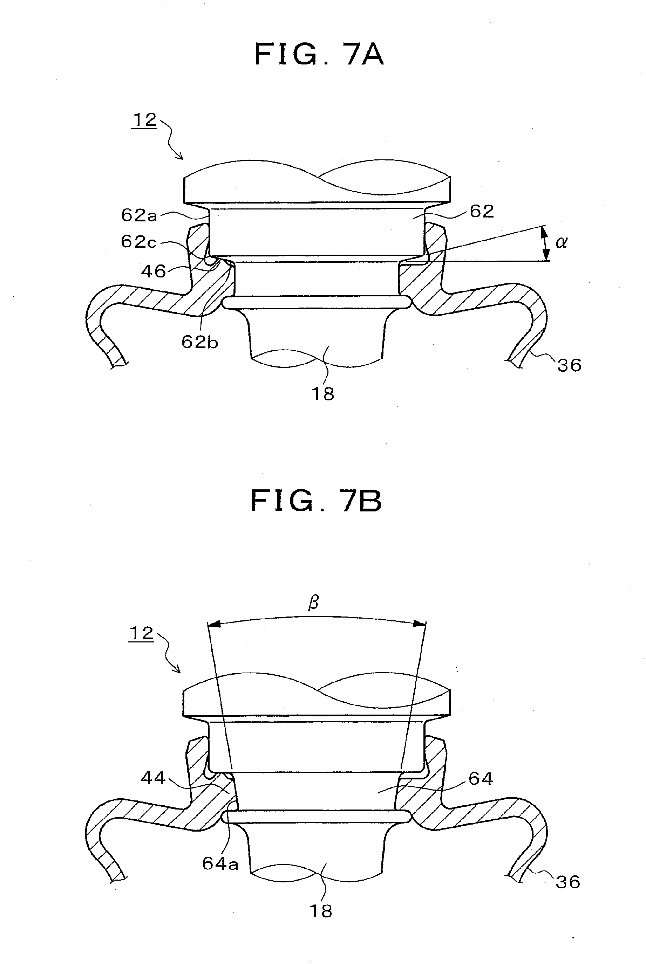

FIGS. 7A and 7B are explanatory drawings showing other embodiments of the ball joint according to the present invention and showing the fitting part of the ball stud 12 and the dust cover 36. FIG. 7A is the same as the embodiment shown in FIGS. 1 to 4 except that the shape of the second flange part of the ball stud 12 is different, and FIG. 7B is the same as the embodiment shown in FIGS. 1 to 4 except that the shape of the intermediate shaft part of the ball stud is different.

In FIG. 7A, in a second flange part 62 of the ball stud 12, a spherical-head-part side end surface 62b is inclined toward the inside of the radial direction at an angle α so as to be close to the neck part 18 side (spherical head part 16 side). When the spherical-head-part side end surface 62b is inclined in this manner, upon assembly of the dust cover 36, the resistance generated upon introduction of the protruding part 46 to the predetermined position, in other words, the resistance generated when the protruding part 46 is moved from the outer peripheral surface 62a of the second flange part 62 to the spherical-head-part side end surface 62b over a corner part 62c can bereduced. Therefore,theassemblycharacteristic of the dust cover 36 can be improved.

In FIG. 7B, an intermediate shaft part 64 of the ball stud 12 is tapered with a distal-end angle β so that the diameter of an outer peripheral surface 64a is reduced toward the neck part 18 side (spherical head part 16 side). When the intermediate shaft part 64 is tapered in this manner, in the process in which the inner peripheral part 44 is seated upon assembly of the dust cover 36, the contact resistance of the inner peripheral part 44 and the outer peripheral surface 64a of the intermediate shaft part 64 is reduced to facilitate movement, wherein the inner peripheral part 44 and the protruding part 46 can be smoothly introduced to the predetermined position. Therefore, the assembly characteristic of the dust cover 36 can be improved.

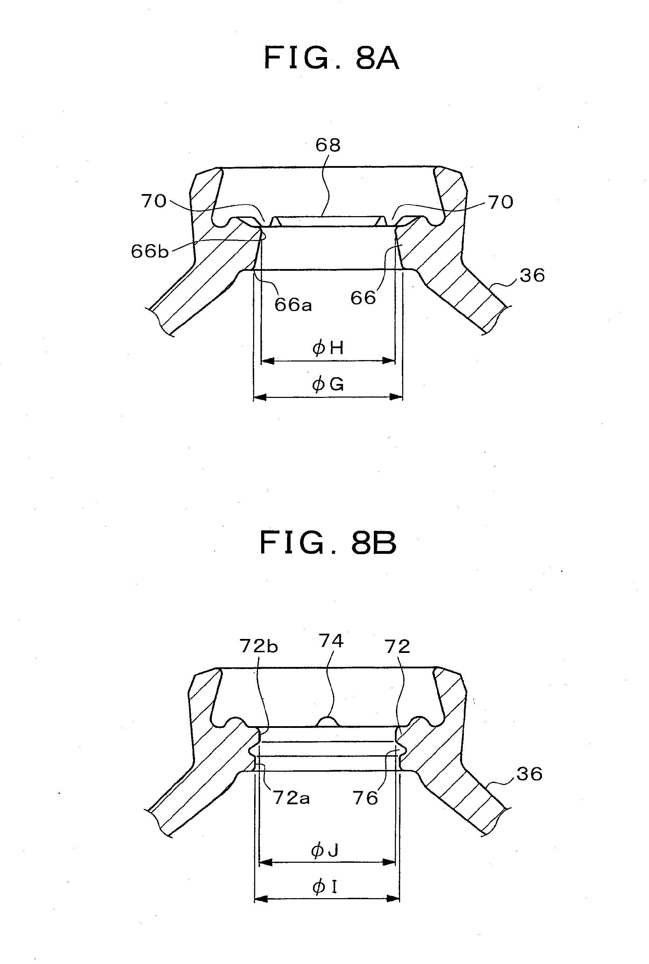

FIGS. 8A and 8B are cross-sectional views showing other embodiments of the ball joint according to the present invention, are particularly showing the small-diameter opening 40 of the dust cover 36, and are the same as the embodiment shown in FIGS. 1 to 4 except that the shape of the inner peripheral part and the shape of the protruding part are different.

In FIG. 8A, an inner peripheral part 66 is tapered so that an inner diameter G of a first-flange-part side end part 66a is larger than an inner diameter H of a second-flange-part side end part 66b. In the present embodiment, a protruding part 68 is annular provided with a gap 70, but may have another shape.

In FIG. 8B, an inner peripheral part 72 is provided with a step in the inner diameter thereof by causing an inner diameter I of a first flange part side 72a to be larger than an inner diameter J of a second flange part side 72b. In the present embodiment, a protruding part 74 is hemispherical, but may have another shape. Moreover, a groove 76 is provided in the circumferential direction between the first flange part side 72a and the second flange part side 72b; however, the groove 76 is not required to be provided. Furthermore, the inner peripheral part 72 may have another shape as long as the inner diameter I of the first flange part side 72a is larger than the inner diameter J of the second flange part side 72b. When the inner diameter of the inner peripheral part 66 or 72 at the first flange part side 66a or 72a is larger than that of the second flange part side 66b or 72b in this manner, in the process in which the inner peripheral part 66 or 72 is seated upon assembly of the dust cover 36, the contact resistance of the inner peripheral part 66 or 72 and the outer peripheral surface 22a of the intermediate shaft part 22 is reduced to facilitate movement, and the inner peripheral part 66 or 72 and the protruding part 68 or 74 can be smoothly introduced to the predetermined position. Therefore, the assembly characteristic of the dust cover 36 can be improved.

The present invention can be applied not only to a ball joint used as a coupling device of a link mechanism for a vehicle, but also to any ball joint provided with a dust cover; and the present invention is not limited to the above described embodiments and includes arbitrary modifications that do not impair the object and advantages thereof.

## Claims

1. A ball joint comprising:
a ball stud provided with a spherical head part at one end of a stud part;
a socket turnably housing the spherical head part, the socket having one side provided with an opening from which the stud part projects; and
a dust cover provided with a small-diameter opening attached to the stud part and a large-diameter opening attached to the socket, the dust cover having elasticity; wherein
the stud part of the ball stud is provided with a first flange part, an intermediate shaft part, and a second flange part sequentially from the side of the spherical head part;
the small-diameter opening of the dust cover is provided with
an inner peripheral part sandwiched between the first flange part and the second flange part and fits the intermediate shaft part by elasticity,
a lip part being in close contact with an outer peripheral surface of the second flange part by elasticity, and
a protruding part positioned between the inner peripheral part and the lip part, having at least a gap at one location, and abutting a spherical-head-part side end surface of the second flange part.

2. The ball joint according to claim 1, wherein
the protruding part of the dust cover is composed of
an annular protrusion provided with one or a plurality of cut-away part.

3. The ball joint according to claim 1, wherein
the protruding part of the dust cover is composed of
a plurality of protrusions disposed in a circumferential direction.

4. The ball joint according to claim 3, wherein
the protruding part of the dust cover is composed of
a plurality of protrusions of any one species of or a combination of two or more species of a circular-cone protrusion, a hemispherical protrusion, a circular-cylindrical protrusion, a pyramidal protrusion, and a prism protrusion.

5. The ball joint according to claim 1 to 4, wherein
the second flange part of the ball stud
is inclined toward the inside of a radial direction so that the spherical-head-part side end surface is close to the spherical head part side.

6. The ball joint according to claim 1 to 4, wherein
the intermediate shaft part of the ball stud
is inclined so that the diameter of the outer peripheral surface thereof is reduced toward the spherical head part side.

7. The ball joint according to claim 1 to 4, wherein
the inner peripheral part of the dust cover has
an end part of the first flange part side having a diameter larger than the diameter of an end part of the second flange part side.

8. The ball joint according to claim 1 to 7, wherein
the inner peripheral part of the dust cover
is provided with a groove in a circumferential direction which retains a lubricant agent.
